# EUROPEAN PATENT APPLICATION

(11) **EP 4 297 526 A1**
(43) Date of publication of application: **27.12.2023**
(21) Application number: 22778846.0
(22) Date of filing: 28.03.2022
(51) Int. Cl.: H04W 76/28

(54) **INFORMATION TRANSMISSION METHOD AND APPARATUS, AND COMMUNICATION DEVICE**

(30) Priority: 01.04.2021 CN 202110358462
(71) Applicant: Vivo Mobile Communication Co., Ltd., Dongguan, Guangdong 523863 (CN)
(72) Inventor: ZHENG, Qian, Dongguan, Guangdong 523863 (CN)
(74) Representative: Murgitroyd & Company
(86) International application number: PCT/CN2022/083317
(87) International publication number: WO 2022/206664

(57) **Abstract**

The present application discloses an information transmission method and apparatus and a communication device, which belong to the field of communication technology. The method in the embodiment of the application includes: determining, by a first communication device directly or based on first information, whether to send a first media access control control element MAC CE, where the first MAC CE is a discontinuous reception MAC CE in a sidelink SL, and the first information is information for determining whether to send the first media access control control element MAC CE.

## Description

### CROSS-REFERENCE TO RELATED APPLICATIONS

This application claims priority to Chinese Patent Application No. 202110358462.0, filed on April 1, 2021 in China, which is incorporated herein by reference in its entirety.

### TECHNICAL FIELD

The present invention relates to the field of communication technology, and in particular to an information transmission method and apparatus and a communication device.

### BACKGROUND

A long term evolution (Long Term Evolution, LTE) system starts to support a sidelink (SideLink, SL) from release 12, and the SL is used for direct data transmission between user equipments (User Equipment, UE). An SL discontinuous reception media access control control element (DRX Command MAC Control Element, DRX Command MAC CE) will be introduced in SL, but it is not sure how to transmit an SL DRX Command MAC CE.

### SUMMARY

The embodiment of the present application provides an information transmission method and apparatus and a communication device, which can solve the problem of how to transmit an SL DRX Command MAC CE.

According to a first aspect, an information transmission method is provided, including:
determining, by a first communication device directly or based on first information, whether to send a first media access control control element MAC CE, where the first MAC CE is a discontinuous reception MAC CE in a sidelink SL, and the first information is information for determining whether to send the first media access control control element MAC CE.

According to a second aspect, an information transmission method is provided, including:
sending, by a second communication device, first information, where the first information is information for determining whether a first communication device sends a first MAC CE.

According to a third aspect, an information transmission apparatus is provided, including:
a first processing module, configured to determine, directly or based on first information, whether to send a first media access control control element MAC CE, where the first MAC CE is a discontinuous reception MAC CE in a sidelink SL, and the first information is information for determining whether to send the first media access control control element MAC CE.

According to a fourth aspect, an information transmission apparatus is provided, including:
a first transmission module, configured to send first information, where the first information is information for determining whether a first communication device sends a first MAC CE.

According to a fifth aspect, a communication device is provided, where the communication device is the first communication device or a second communication device, and the communication device includes a processor, a memory, and a program or an instruction stored in the memory and executable on the processor, and when the program or instruction is executed by the processor, the steps of the method described in the first aspect or the second aspect are implemented.

According to a sixth aspect, a communication device is provided, where the communication device is a first communication device, and includes a processor and a communication interface, where the processor is configured to determine, directly or based on first information, whether to send a first media access control control element MAC CE, where the first MAC CE is a discontinuous reception MAC CE in a sidelink SL, and the first information is information for determining whether to send the first media access control control element MAC CE.

According to a seventh aspect, a communication device is provided, where the communication device is a second communication device, and includes a processor and a communication interface, where the communication interface is used to send first information, and the first information is information for determining whether a first communication device sends a first media access control control element MAC CE.

According to an eighth aspect, a readable storage medium is provided. The readable storage medium stores a program or an instruction, and when the program or the instruction is executed by a processor, the steps of the method in the first aspect or the steps of the method in the second aspect are implemented.

According to a ninth aspect, a chip is provided. The chip includes a processor and a communications interface, the communications interface is coupled to the processor, and the processor is configured to run a program or an instruction to implement the method in the first aspect or the method in the second aspect.

According to a tenth aspect, a computer program/program product is provided, the computer program/program product is stored in a non-volatile storage medium, and the program/program product is executed by at least one processor to implement the steps of the method described in the first aspect or the second aspect.

In the embodiment of the present application, based on the terminal implementation or the first information, it is determined whether to send the first media access control control element MAC CE. The first MAC CE is the discontinuous reception MAC CE in the sidelink SL. In this way, the sending mechanism of the first MAC CE is clarified, so that the terminal can send the first MAC CE according to the sending mechanism.

### BRIEF DESCRIPTION OF DRAWINGS

FIG. 1 is a structural diagram of a communication system to which embodiments of this application can be applied;
FIG. 2 is a first schematic flowchart of an information transmission method according to an embodiment of this application;
FIG. 3 is a second schematic flowchart of an information transmission method according to an embodiment of this application;
FIG. 4 is a first schematic diagram of a module of an information transmission apparatus according to an embodiment of this application;
FIG. 5 is a structural block diagram of a communication device according to an embodiment of this application;
FIG. 6 is a structural block diagram of a terminal according to an embodiment of this application; and
FIG. 7 is a second schematic diagram of a module of an information transmission apparatus according to an embodiment of this application; and
FIG. 8 is a structural block diagram of a network side device according to an embodiment of this application.

### DESCRIPTION OF EMBODIMENTS

The following clearly describes technical solutions in embodiments of this application with reference to accompanying drawings in the embodiments of this application. Apparently, the described embodiments are some but not all of the embodiments of this application. All other embodiments obtained by a person of ordinary skill in the art based on the embodiments of this application shall fall within the protection scope of this application.

The terms "first", "second", and the like in this specification and claims of this application are used to distinguish between similar objects instead of describing a specific order or sequence. It should be understood that, data termed in such a way is interchangeable in proper circumstances, so that the embodiments of this application can be implemented in an order other than the order illustrated or described herein. Objects classified by "first" and "second" are usually of a same type, and the number of objects is not limited. For example, there may be one or more first objects. In addition, in the description and the claims, "and/or" represents at least one of connected objects, and a character "/" generally represents an "or" relationship between associated objects.

It should be noted that the technology described in the embodiments of this application is not limited to a Long Term Evolution (Long Term Evolution, LTE)/LTE-Advanced (LTE-Advanced, LTE-A) system, and may also be used in other wireless communications systems such as Code Division Multiple Access (Code Division Multiple Access, CDMA), Time Division Multiple Access (Time Division Multiple Access, TDMA), Frequency Division Multiple Access (Frequency Division Multiple Access, FDMA), Orthogonal Frequency Division Multiple Access (Orthogonal Frequency Division Multiple Access, OFDMA), Single-carrier Frequency-Division Multiple Access (Single-carrier Frequency-Division Multiple Access, SC-FDMA), and another system. The terms "system" and "network" in the embodiments of this application may be used interchangeably. The technologies described can be applied to both the systems and the radio technologies mentioned above as well as to other systems and radio technologies. The following descriptions describe a new radio (New Radio, NR) system for example purposes, and NR terms are used in most of the following descriptions, but these technologies can also be applied to an application other than an NR system application, for example, a 6^{th} generation (6th Generation, 6G) communication system.

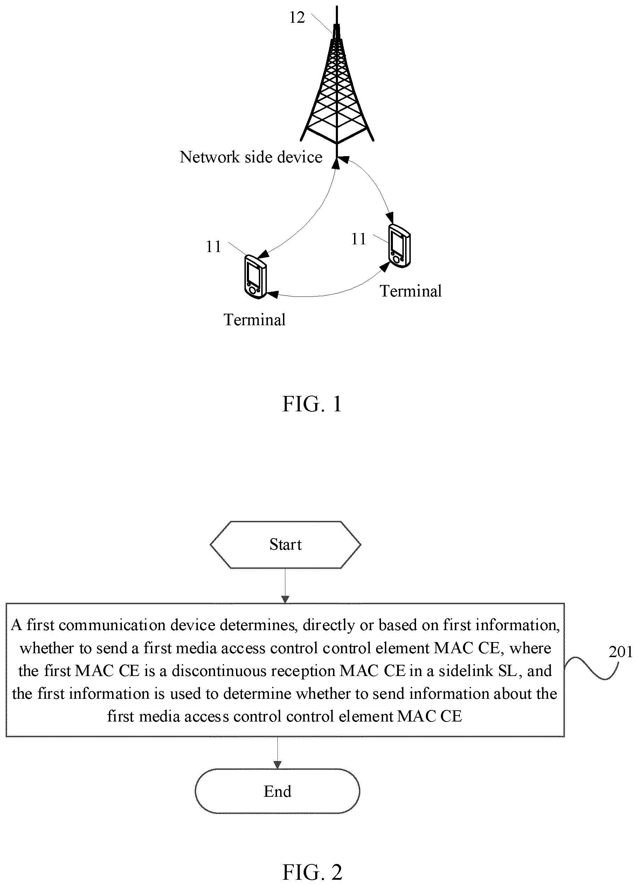

FIG. 1 is a structural diagram of a wireless communications system to which embodiments of this application can be applied. The wireless communications system includes a terminal 11 and a network side device 12. The terminal 11 may also be called a terminal device or user equipment (UE), and the terminal 11 may be a mobile phone, a tablet personal computer (Tablet Computer), a laptop computer (Laptop Computer) or a notebook computer, a personal digital Assistant (PDA), a palmtop computer, a netbook, an ultra-mobile personal computer (UMPC), a mobile Internet device (MID), a wearable device (Wearable Device) or a vehicle-mounted device (VUE), a pedestrian terminal (PUE), and other terminal side devices. The wearable device includes: smart watches, bracelets, earphones, glasses, etc. It should be noted that a specific type of the terminal 11 is not limited in this embodiment of this application. The network side device 12 may be a base station or a core network device. The base station may be referred to as a node B, an evolved node B, an access point, a base transceiver station (BTS), a radio base station, a radio transceiver, a basic service set (BSS), an extended service set (ESS), a node B, an evolved node B (eNB), a home node B, a home evolved node B, a WLAN access point, a WiFi node, a transmitting receiving point (TRP), or other appropriate terms in the art. As long as a same technical effect is achieved, the base station is not limited to a specified technical term. It should be noted that, in embodiments of the present application, only a base station in the NR system is used as an example, but a specific type of the base station is not limited.

The information transmission method provided by the embodiment of the present application will be described in detail below through some embodiments and application scenarios with reference to the accompanying drawings.

As shown in FIG. 2, the embodiment of this application provides an information transmission method, including:

Step 201: A first communication device determines, directly or based on first information, whether to send a first media access control control element MAC CE, where the first MAC CE is a discontinuous reception MAC CE in a sidelink SL, and the first information is information for determining whether to send the first media access control control element MAC CE.

In the embodiment of the present application, the first communication device is specifically a first terminal. The discontinuous reception (Discontinuous Reception, DRX) MAC CE is used to instruct to stop running related DRX timers (for example, DRX onduration timer (DRX-onDuration Timer) and DRX-inactivity timer (DRX-InactivityTimer)), so that the terminal enters the DRX inactive state.

In the embodiment of the present application, based on the terminal implementation or the first information, it is determined whether to send the first media access control control element MAC CE. The first MAC CE is the discontinuous reception MAC CE in the sidelink SL. In this way, the sending mechanism of the first MAC CE is clarified, so that the terminal can send the first MAC CE according to the sending mechanism.

Optionally, the first information includes at least one of the following:
a first item: indication information sent by the second communication device, where the indication information is used to indicate whether to send the first MAC CE or not to send the first MAC CE;
a second item: terminal assistant information sent by the second communication device; and
a third item: priority information of the first MAC CE.

In the embodiment of the present application, the second communication device is a second terminal or a network side device, and the network side device may be a serving base station of the first terminal or a serving base station of the second terminal. Optionally, the serving base station of the first terminal and the serving base station of the second terminal may be the same or different.

For the first item, the indication information may be an explicit instruction, for example, indicated by one bit, and the first terminal directly determines, based on the indication information, to send the first MAC CE or not to send the first MAC CE. Specifically, when the indication information indicates to send the first MAC CE, the first communication device sends the first MAC CE, and when the above indication information indicates not to send the first MAC CE, the first communication device does not send the first MAC CE.

For the second item, the terminal assistant information may specifically be terminal assistant information of the second terminal, and the first terminal determines, according to the terminal assistant information, whether to send the first MAC CE.

Further optionally, the terminal assistant information includes at least one of the following:
cellular network communication (Uu) discontinuous reception configuration information;
quality of service QoS information; and
destination layer 2 identifier (destination L2 ID).

Here, according to the terminal assistant information, the first terminal determines different requirements that need to be met, and then determines whether to send the first MAC CE.

For the third item, optionally, priority information of the first MAC CE is a fixed priority value;
or the priority information of the first MAC CE is determined according to a priority value of at least one SL logical channel;
or the priority information of the first MAC CE is determined according to a multiplexing priority of SL media access control protocol data unit MAC PDU.

In the case that the priority information of the first MAC CE is a fixed priority value, a value can be selected from the priority value range [1,8] allowed by the protocol as the priority of the first MAC CE, for example, priority value =8.

In the case that the priority information of the first MAC CE is determined according to the priority value of at least one SL logical channel, the priority information of the first MAC CE may be determined according to a priority of a highest-priority logical channel among the SL logical channels with data to be transmitted, or the priority information of the first MAC CE may be determined according to the highest priority value in the configured SL logical channel.

In the case that the priority information of the first MAC CE is determined according to the multiplexing priority of the SL media access control protocol data unit MAC PDU, the multiplexing priority of the SL MAC PDU may be at least one of the following:
shared control channel data > first MAC CE > SL CSI report MAC CE > service channel data;
shared control channel data> SL CSI report MAC CE > first MAC CE > service channel data; and
shared control channel data > SL CSI report MAC CE >service channel data> first MAC CE.

Optionally, in this embodiment of the present application, in a case that the first information is the priority information of the first MAC CE, and the priority information of the first MAC CE is determined according to the multiplexing priority of the SL MAC PDU, the method further includes:
in the case that uplink transmission and SL transmission meet a preset condition, if the SL transmission only includes the first MAC CE, prioritizing uplink transmission.

Here, it can be understood that the priority of the first MAC CE is always lower than that of SL service channel data.

The preset condition may be that the uplink transmission and the SL transmission cannot be performed at the same time, or due to power limitation, one of the uplink transmission and the SL transmission needs to be selected for transmission.

Specifically, in the case that the uplink transmission and SL transmission meet the preset condition, if the SL transmission only includes the first MAC CE, the uplink transmission is prioritized, and the SL transmission is abandoned.

In addition, when the priority information of the first MAC CE is determined according to a fixed priority value (the smaller the priority value, the higher the priority it reflects), or is determined according to the priority value of at least one SL logical channel, if the uplink transmission and SL transmission meet the preset condition and the SL transmission includes the first MAC CE, the existing rule is reused. That is, the network configures two thresholds, namely the SL priority threshold and the UL priority threshold. If the highest priority value in SL transmission is less than the SL priority threshold, and the highest priority value in LTL transmission is greater than or equal to the LTL priority threshold, SL is prioritized; otherwise, UL is prioritized.

If the priority information of the first MAC CE is determined according to the multiplexing priority of the SL MAC PDU, if the priority of the first MAC CE is always lower than the SL service channel data and the SL transmission includes the first MAC CE and the second information, the existing rule is reused. Besides, in this case, it only needs to be considered whether the second information satisfies the judgment condition "the highest priority value in SL transmission is less than the SL priority threshold". The second information includes at least one of SL CSI report MAC CE and SL service channel data.

If the priority information of the first MAC CE is determined according to the multiplexing priority of the SL MAC PDU, if the priority of the first MAC CE is always higher than that of the SL traffic channel data and the SL transmission only contains the first MAC CE, the UL is always prioritized.

If the priority information of the first MAC CE is determined according to the multiplexing priority of the SL MAC PDU, if the priority of the first MAC CE is always higher than that of the SL service channel data and the SL transmission includes the first MAC CE and the second information, the existing rule is reused. Besides, in this case, the judgment condition "the highest priority value in SL transmission is less than the SL priority threshold" is satisfied, and therefore it is only necessary to see whether the comparison result of UL transmission satisfies the judgment condition "the highest priority value in UL transmission is greater than or equal to the UL priority threshold", and it is further determined whether to prioritize LTL or SL.

Optionally, the method in this embodiment of this application further includes:

The first communication device determines a hybrid automatic repeat request HARQ attribute of the first MAC CE according to at least one of the following:
preset fixed attribute; and
a HARQ attribute of at least one SL logical channel.

For example, the first communication device selects one as the HARQ attribute of the first MAC CE from the HARQ attribute value enumeration type [enabled, disabled] allowed by the protocol, for example, the HARQ attribute of the first MAC CE is fixed as disabled.

For another example, the first communication device determines according to the HARQ attribute of the logical channel with the highest priority value among SL logical channels with data to be transmitted, or determines according to the HARQ attribute of the logical channel with the highest priority value among configured SL logical channels.

For another example, when the first MAC CE is sent alone, the HARQ attribute of the first MAC CE is determined according to the preset fixed attribute, and when the first MAC CE is sent together with SL data, the HARQ attribute of the first MAC CE is determined according to the HARQ attribute of at least one SL logical channel. In this way, if the HARQ attribute of the logical channel with the highest priority value among the SL logical channels with data to be transmitted is disabled, and the HARQ attribute of the first MAC CE is fixed as enabled, the HARQ attribute of the first MAC CE can be temporarily changed, so that multiplexing transmission can be performed according to the data to be transmitted.

Optionally, in the method of the embodiment of the present application, after the hybrid automatic repeat request HARQ attribute of the first MAC CE is determined, the method further includes:
determining, by the first communication device, a HARQ attribute of SL transmission according to a preset rule, where the SL transmission includes at least the first MAC CE;
where the preset rule includes at least one of the following:
   in a case that the HARQ attribute of the first MAC CE is a preset fixed attribute, determining the HARQ attribute of the SL transmission according to the preset fixed attribute of the first MAC CE;
   in a case that the HARQ attribute of the first MAC CE is a HARQ attribute of at least one SL logical channel, if the SL transmission includes first data, determining the HARQ attribute of the SL transmission according to a HARQ attribute of a logical channel with the highest priority among SL logical channels corresponding to the first data;
   in a case that the HARQ attribute of the first MAC CE is a HARQ attribute of at least one SL logical channel, if the SL transmission includes no first data, determining the HARQ attribute of the SL transmission according to a HARQ attribute of a logical channel with the highest priority among configured SL logical channels;
   in a case that the HARQ attribute of the first MAC CE is determined according to a preset fixed attribute and a HARQ attribute of at least one SL logical channel, if the SL transmission includes first data, determining the HARQ attribute of the SL transmission according to a HARQ attribute of a logical channel with the highest priority among SL logical channels corresponding to the first data; and
   in a case that the HARQ attribute of the first MAC CE is determined according to a preset fixed attribute and a HARQ attribute of at least one SL logical channel, if the SL transmission includes no first data, determining the HARQ attribute of the SL transmission according to the preset fixed attribute of the first MAC CE.

Optionally, the first data is a MAC service data unit SDU.

In the embodiment of the present application, based on the terminal implementation or the first information, it is determined whether to send the first media access control control element MAC CE. The first MAC CE is the discontinuous reception MAC CE in the sidelink SL. In this way, the sending mechanism of the first MAC CE is clarified, so that the terminal can send the first MAC CE according to the sending mechanism.

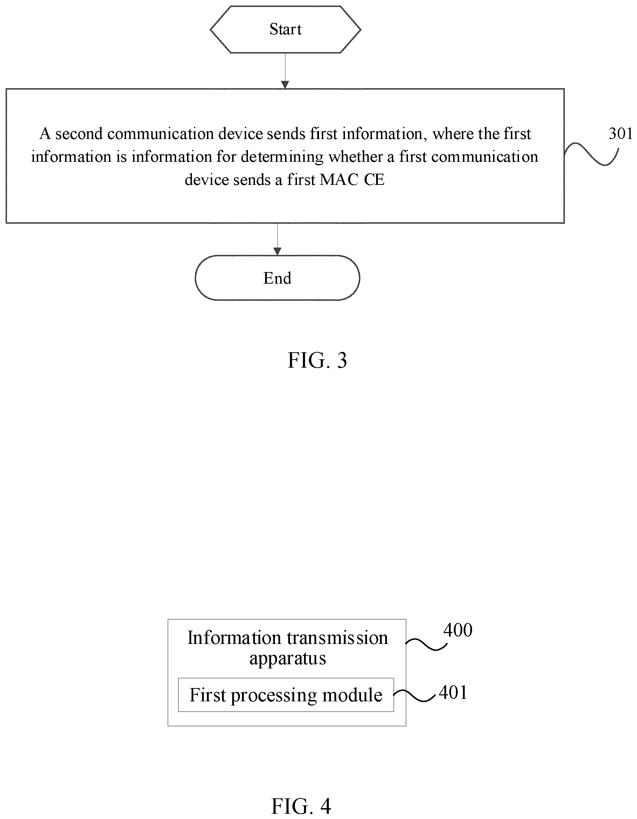

As shown in FIG. 3, the embodiment of this application further provides an information transmission method, including:

Step 301: A second communication device sends first information, where the first information is information for determining whether a first communication device sends a first MAC CE.

In this step, the first communication device is specifically the first terminal. The second communication device is a second terminal or a network side device, and the network side device may be a serving base station of the first terminal or a serving base station of the second terminal. Optionally, the serving base station of the first terminal and the serving base station of the second terminal may be the same or different.

The discontinuous reception (Discontinuous Reception, DRX) MAC CE is used to instruct to stop running related DRX timers (for example, DRX onduration timer (DRX-onDuration Timer) and DRX-inactivity timer (DRX-InactivityTimer)), so that the terminal enters the DRX inactive state.

In this embodiment of the present application, the first information is sent, and the first information is information for determining whether the first communication device sends the first media access control control element MAC CE, so that the first communication device can determine, according to the first information, whether to send the first MAC CE.

Optionally, the first information includes at least one of the following:
indication information, where the indication information is used to indicate whether to send the first MAC CE or not to send the first MAC CE; and
terminal assistant information.

Optionally, the terminal assistant information includes at least one of the following:

Uu discontinuous reception configuration information;
quality of service QoS information; and
destination layer 2 identifier.

The foregoing indication information and terminal assistant information have been described in detail in the method embodiment on the first communication device side, and will not be repeated here.

In this embodiment of the present application, the first information is sent, and the first information is information for determining whether the first communication device sends the first media access control control element MAC CE, so that the first communication device can determine, according to the first information, whether to send the first MAC CE.

It should be noted that the information transmission method provided in this embodiment of this application may be performed by an information transmission apparatus, or a control module that is in the information transmission apparatus and that is configured to perform the information transmission method. In this embodiment of this application, that the information transmission apparatus performs the information transmission method is used as an example to describe the information transmission apparatus provided in this embodiment of this application.

As shown in FIG. 4, the embodiment of this application provides an information transmission apparatus 400, including:
a first processing module 401, configured to determine, directly or based on first information, whether to send a first media access control control element MAC CE, where the first MAC CE is a discontinuous reception MAC CE in a sidelink SL, and the first information is information for determining whether to send the first media access control control element MAC CE.

Optionally, the apparatus in this embodiment of the present application further includes: a transmission module, configured to send the first MAC CE when the first processing module determines to send the first MAC CE.

Optionally, the first information includes at least one of the following:
indication information sent by the second communication device, where the indication information is used to indicate whether to send the first MAC CE or not to send the first MAC CE;
terminal assistant information sent by the second communication device; and
priority information of the first MAC CE.

Optionally, the terminal assistant information includes at least one of the following:

Uu discontinuous reception configuration information;
quality of service QoS information; and
destination layer 2 identifier.

Optionally, the priority information of the first MAC CE is a fixed priority value;
or the priority information of the first MAC CE is determined according to a priority value of at least one SL logical channel;
or the priority information of the first MAC CE is determined according to a multiplexing priority of SL media access control protocol data unit MAC PDU.

Optionally, in a case that the first information is the priority information of the first MAC CE, and the priority information of the first MAC CE is determined according to the multiplexing priority of the MAC PDU, the apparatus further includes:
a second processing module, configured to: in the case that uplink transmission and SL transmission meet a preset condition, if the SL transmission only includes the first MAC CE, prioritize uplink transmission.

Optionally, the apparatus of the embodiment of the present application further includes:
a first determining module, configured to determine a hybrid automatic repeat request HARQ attribute of the first MAC CE according to at least one of the following:
preset fixed attribute; and
a HARQ attribute of at least one SL logical channel.

Optionally, the apparatus of the embodiment of the present application further includes:
a second determination module, configured to determine a HARQ attribute of SL transmission according to a preset rule after the first determination module determines the HARQ attribute of the first MAC CE, where the SL transmission includes at least the first MAC CE;
where the preset rule includes at least one of the following:
   in a case that the HARQ attribute of the first MAC CE is a preset fixed attribute, determining the HARQ attribute of the SL transmission according to the preset fixed attribute of the first MAC CE;
   in a case that the HARQ attribute of the first MAC CE is a HARQ attribute of at least one SL logical channel, if the SL transmission includes first data, determining the HARQ attribute of the SL transmission according to a HARQ attribute of a logical channel with the highest priority among SL logical channels corresponding to the first data;
   in a case that the HARQ attribute of the first MAC CE is a HARQ attribute of at least one SL logical channel, if the SL transmission includes no first data, determining the HARQ attribute of the SL transmission according to a HARQ attribute of a logical channel with the highest priority among configured SL logical channels;
   in a case that the HARQ attribute of the first MAC CE is determined according to a preset fixed attribute and a HARQ attribute of at least one SL logical channel, if the SL transmission includes first data, determining the HARQ attribute of the SL transmission according to a HARQ attribute of a logical channel with the highest priority among SL logical channels corresponding to the first data; and
   in a case that the HARQ attribute of the first MAC CE is determined according to a preset fixed attribute and a HARQ attribute of at least one SL logical channel, if the SL transmission includes no first data, determining the HARQ attribute of the SL transmission according to the preset fixed attribute of the first MAC CE.

In the embodiment of the present application, based on the terminal implementation or the first information, the apparatus determines whether to send the first media access control control element MAC CE. The first MAC CE is the discontinuous reception MAC CE in the sidelink SL. In this way, the sending mechanism of the first MAC CE is clarified, so that the terminal can send the first MAC CE according to the sending mechanism.

The information transmission apparatus in the embodiment of the present application may be an apparatus, an apparatus with an operating system or an electronic device, or it may be a component, an integrated circuit, or a chip in a terminal. The apparatus or electronic device may be a mobile terminal or a non-mobile terminal. For example, the mobile terminal may include but is not limited to the types of the foregoing listed terminal 11, and the non-mobile terminal may be a server, a network attached storage (Network Attached Storage, NAS), a personal computer (personal computer, PC), a television (television, TV), an automated teller machine, or a self-service machine. This is not specifically limited in this embodiment of this application.

The apparatus according to an embodiments of the present disclosure can implement the processes in the method embodiments in FIG. 2, and achieve the same technical effect. To avoid repetition, details are not described herein again.

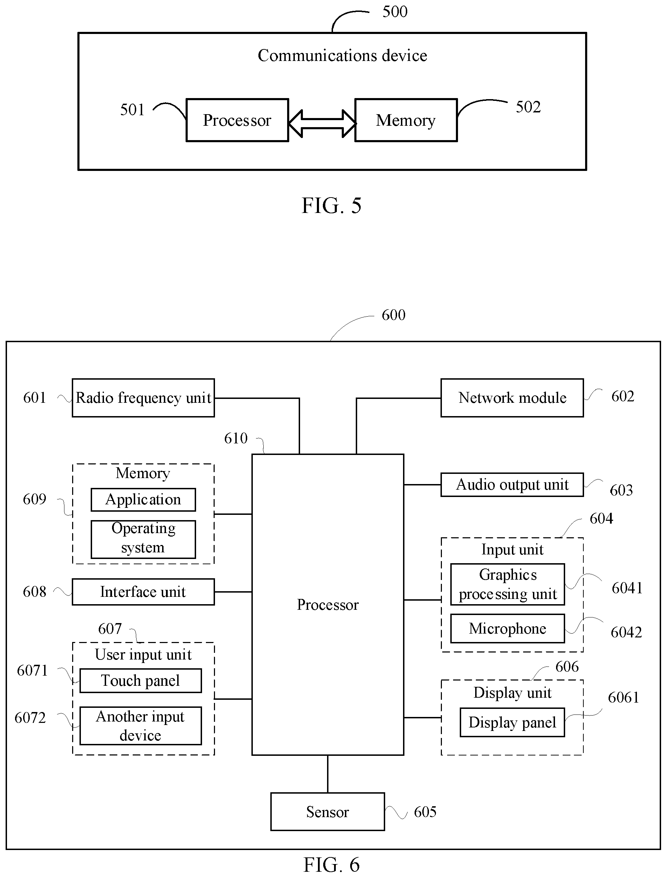

Optionally, as shown in FIG. 5, an embodiment of the present application further provides a communication device 500, including a processor 501, a memory 502, and a program or an instruction stored in the memory 502 and executable on the processor 501. When the communication device 500 is the first communication device, when the program or instruction is executed by the processor 501, each process of the embodiment of the foregoing information transmission method applied to the first communication device is performed, and the same technical effect can be achieved. When the communication device 500 is the second communication device, when the program or instruction is executed by the processor 501, each process of the embodiment of the information transmission method applied to the second communication device can be achieved, and the same technical effect can be achieved. To avoid repetition, details are not repeated here.

The embodiment of the present application also provides a first communication device, and the first communication device is specifically the first terminal, and includes a processor and a communication interface. The processor is configured to determine, directly or based on first information, whether to send a first media access control control element MAC CE, where the first MAC CE is a discontinuous reception MAC CE in a sidelink SL, and the first information is information for determining whether to send the first media access control control element MAC CE.

This embodiment corresponds to the above-mentioned method embodiment on the first communication device side, and each implementation process and implementation manner of the above-mentioned method embodiment can be applied to this embodiment, and can achieve the same technical effect. Specifically, FIG. 6 is a schematic diagram of a hardware structure of a terminal implementing an embodiment of the present application. The terminal may specifically be the first terminal or the second terminal. The terminal 600 includes, but is not limited to, at least some components of a radio frequency unit 601, a network module 602, an audio output unit 603, an input unit 604, a sensor 605, a display unit 606, a user input unit 607, an interface unit 608, a memory 609, and a processor 610.

A person skilled in the art can understand that the terminal 600 may further include a power supply (such as a battery) that supplies power to each component. The power supply may be logically connected to the processor 610 by using a power supply management system, to implement functions such as charging and discharging management, and power consumption management by using the power supply management system. The terminal structure shown in FIG. 6 constitutes no limitation on the terminal, and the terminal may include more or fewer components than those shown in the figure, or combine some components, or have different component arrangements. Details are not described herein.

It should be understood that, in this embodiment of this application, the input unit 604 may include a graphics processing unit (Graphics Processing Unit, GPU) 6041 and a microphone 6042, and the graphics processing unit 6041 processes image data of a still picture or a video obtained by an image capture apparatus (such as a camera) in a video capture mode or an image capture mode. The display unit 606 may include a display panel 6061. Optionally, the display panel 6061 may be configured in a form such as a liquid crystal display or an organic light-emitting diode. The user input unit 607 includes a touch panel 6071 and another input device 6072. The touch panel 6071 is also referred to as a touchscreen. The touch panel 6071 may include two parts: a touch detection apparatus and a touch controller. The another input device 6072 may include but is not limited to a physical keyboard, a functional button (such as a volume control button or a power on/off button), a trackball, a mouse, and a joystick. Details are not described herein.

In this embodiment of this application, the radio frequency unit 601 receives downlink data from a network side device and then sends the downlink data to the processor 610 for processing; and sends uplink data to the network side device. Usually, the radio frequency unit 601 includes but is not limited to an antenna, at least one amplifier, a transceiver, a coupler, a low noise amplifier, a duplexer, and the like.

The memory 609 may be configured to store a software program or an instruction and various data. The memory 609 may mainly include a program or instruction storage area and a data storage area, where the program or instruction storage area may store an operating system, an application program or instructions required by at least one function (such as a sound playback function, an image playback function, etc.) and the like. In addition, the memory 609 may include a high-speed random access memory, and may further include a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory, for example, at least one disk storage device, a flash memory device, or another non-volatile solid-state storage device.

The processor 610 may include one or more processing units. Optionally, an application processor and a modem processor may be integrated into the processor 610. The application processor mainly processes an operating system, a user interface, an application, an instruction, or the like. The modem processor mainly processes wireless communications, for example, a baseband processor. It can be understood that, alternatively, the modem processor may not be integrated into the processor 610.

In the case that the terminal is the first terminal, the processor 610 is configured to determine, directly or based on first information, whether to send a first media access control control element MAC CE, where the first MAC CE is a discontinuous reception MAC CE in a sidelink SL, and the first information is information for determining whether to send the first media access control control element MAC CE.

Optionally, the first information includes at least one of the following:
indication information sent by the second communication device, where the indication information is used to indicate whether to send the first MAC CE or not to send the first MAC CE;
terminal assistant information sent by the second communication device; and
priority information of the first MAC CE.

Optionally, the terminal assistant information includes at least one of the following:

Uu discontinuous reception configuration information;
quality of service QoS information; and
destination layer 2 identifier.

Optionally, the priority information of the first MAC CE is a fixed priority value;
or the priority information of the first MAC CE is determined according to a priority value of at least one SL logical channel;
or the priority information of the first MAC CE is determined according to a multiplexing priority of SL media access control protocol data unit MAC PDU.

Optionally, in a case that the first information is the priority information of the first MAC CE, and the priority information of the first MAC CE is determined according to the multiplexing priority of the MAC PDU, the processor 610 is further configured to:
in the case that uplink transmission and SL transmission meet a preset condition, if the SL transmission only includes the first MAC CE, prioritize uplink transmission.

Optionally, the processor 610 is further configured to:
determine a hybrid automatic repeat request HARQ attribute of the first MAC CE according to at least one of the following:
preset fixed attribute; and
a HARQ attribute of at least one SL logical channel.

Optionally, the processor 610 is further configured to:
determining, by the first communication device, a HARQ attribute of SL transmission according to a preset rule, where the SL transmission includes at least the first MAC CE;
where the preset rule includes at least one of the following:
   in a case that the HARQ attribute of the first MAC CE is a preset fixed attribute, determining the HARQ attribute of the SL transmission according to the preset fixed attribute of the first MAC CE;
   in a case that the HARQ attribute of the first MAC CE is a HARQ attribute of at least one SL logical channel, if the SL transmission includes first data, determining the HARQ attribute of the SL transmission according to a HARQ attribute of a logical channel with the highest priority among SL logical channels corresponding to the first data;
   in a case that the HARQ attribute of the first MAC CE is a HARQ attribute of at least one SL logical channel, if the SL transmission includes no first data, determining the HARQ attribute of the SL transmission according to a HARQ attribute of a logical channel with the highest priority among configured SL logical channels;
   in a case that the HARQ attribute of the first MAC CE is determined according to a preset fixed attribute and a HARQ attribute of at least one SL logical channel, if the SL transmission includes first data, determining the HARQ attribute of the SL transmission according to a HARQ attribute of a logical channel with the highest priority among SL logical channels corresponding to the first data; and
   in a case that the HARQ attribute of the first MAC CE is determined according to a preset fixed attribute and a HARQ attribute of at least one SL logical channel, if the SL transmission includes no first data, determining the HARQ attribute of the SL transmission according to the preset fixed attribute of the first MAC CE.

In the case that the terminal is the second terminal, the radio frequency unit 601 is configured to send first information, where the first information is information for determining whether a first communication device sends a first media access control control element MAC CE.

Optionally, the first information includes at least one of the following:
indication information, where the indication information is used to indicate whether to send the first MAC CE or not to send the first MAC CE; and
terminal assistant information.

Optionally, the terminal assistant information includes at least one of the following:

Uu discontinuous reception configuration information;
quality of service QoS information; and
destination layer 2 identifier.

In the embodiment of the present application, based on the terminal implementation or the first information, it is determined whether to send the first media access control control element MAC CE. The first MAC CE is the discontinuous reception MAC CE in the sidelink SL. In this way, the sending mechanism of the first MAC CE is clarified, so that the terminal can send the first MAC CE according to the sending mechanism.

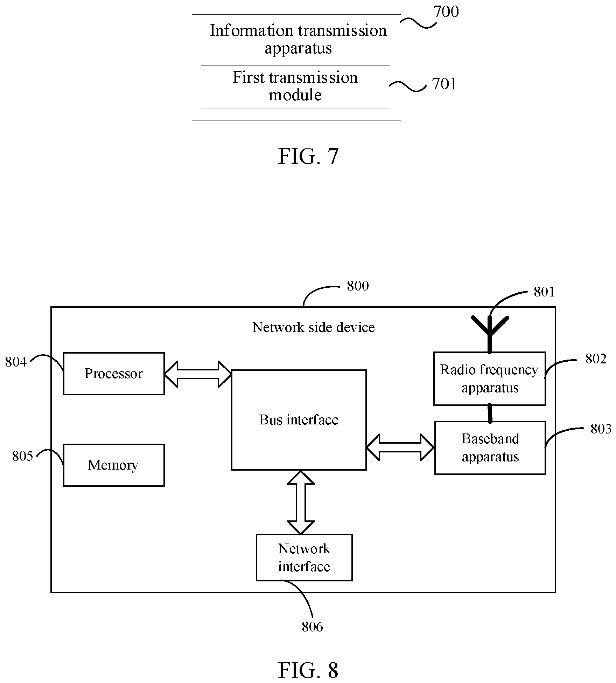

As shown in FIG. 7, the embodiment of this application further provides an information transmission apparatus 700, including:
a first transmission module 701, configured to send first information, where the first information is information for determining whether a first communication device sends a first MAC CE.

Optionally, the apparatus of the embodiment of the present application further includes:
a third determining module, configured to determine the first information.

Optionally, the first information includes at least one of the following:
indication information, where the indication information is used to indicate whether to send the first MAC CE or not to send the first MAC CE; and
terminal assistant information.

Optionally, the terminal assistant information includes at least one of the following:

Uu discontinuous reception configuration information;
quality of service QoS information; and
destination layer 2 identifier.

In this embodiment of the present application, the apparatus sends the first information, and the first information is information for determining whether the first communication device sends the first media access control control element MAC CE, so that the first communication device can determine, according to the first information, whether to send the first MAC CE.

The embodiment of the present application also provides a network side device (the second communication device), including a processor and a communication interface, and the communication interface is used to send first information, and the first information is information for determining whether the first communication device sends the first media access control control element MAC CE. This embodiment of the network side device corresponds to the above-mentioned method embodiment on the second communication device side, and each implementation process and implementation manner of the above-mentioned method embodiment can be applied to this embodiment of the network side device, and can achieve the same technical effect.

Specifically, the embodiment of the present application further provides a network side device (the above-mentioned second communication device). As shown in FIG. 8, a network device 800 includes an antenna 801, a radio frequency apparatus 802, and a baseband apparatus 803. The antenna 801 is connected to the radio frequency apparatus 802. In an uplink direction, the radio frequency apparatus 802 receives information through the antenna 801, and sends the received information to the baseband apparatus 803 for processing. In a downlink direction, the baseband apparatus 803 processes information to be sent and sends the information to the radio frequency apparatus 802, and the radio frequency apparatus 802 processes the received information and sends the information through the antenna 801.

The foregoing band processing apparatus may be located in the baseband apparatus 803, and the method performed through the second communication device in the foregoing embodiment may be implemented in the baseband apparatus 803. The baseband apparatus 803 includes a processor 804 and a memory 805.

The baseband apparatus 803 may include, for example, at least one baseband board, where a multiple chips are disposed on the baseband board. As shown in FIG. 8, one chip is, for example, the processor 804, which is connected to the memory 805, so as to invoke a program in the memory 805 to perform operations of the second communication device side device shown in the foregoing method embodiment.

The baseband apparatus 803 may further include a network interface 806, configured to exchange information with the radio frequency apparatus 802, where the interface is, for example, a common public radio interface (common public radio interface, CPRI for short).

Specifically, the network side device (the above-mentioned second communication device) in this embodiment of the present invention further includes: an instruction or a program stored on the memory 805 and executable on the processor 804, and the processor 804 invokes the instruction or program in the memory 805 to execute the method executed by each module shown in FIG. 1, and achieve the same technical effect. To avoid repetition, details are not described herein again.

An embodiment of this application further provides a readable storage medium. The readable storage medium stores a program or an instruction, and when the program or the instruction is executed by a processor, the processes of the foregoing information transmission method embodiment are implemented and a same technical effect can be achieved. To avoid repetition, details are not described herein again.

The processor is a processor in the terminal in the foregoing embodiment. The readable storage medium includes a computer-readable storage medium, such as a computer read-only memory (Read-Only Memory, ROM), a random access memory (Random Access Memory, RAM), a magnetic disk, or an optical disc.

An embodiment of the present application further provides a chip, the chip includes a processor and a communication interface, the communication interface is coupled to the processor, and the processor is configured to run programs or instructions to implement each process of the embodiment of the foregoing information transmission method and the same technical effects can be achieved. To avoid repetition, details are not described herein again.

It should be understood that the chip mentioned in this embodiment of this application may also be referred to as a system-level chip, a system chip, a chip system, or an on-chip system chip.

The embodiments of the present application further provide a computer program product, the computer program product is stored in a non-volatile storage medium, and the computer program product is executed by at least one processor to implement the various processes of the information transmission method embodiments, and the same technical effects can be achieved. To avoid repetition, details are not described herein again.

It should be noted that in this specification, the term "include", "including", or any other variant is intended to cover non-exclusive inclusion, so that a process, method, article, or apparatus that includes a series of elements includes not only those elements but also other elements that are not explicitly listed, or includes elements inherent to such a process, method, article, or apparatus. An element limited by "includes a ..." does not, without more constraints, preclude the presence of additional identical elements in the process, method, article, or apparatus that includes the element. Furthermore, it should be noted that the scope of the methods and apparatuses in the implementations of this application is not limited to performing the functions in the order shown or discussed, but may also include performing the functions in a substantially simultaneous manner or in a reverse order depending on the functions involved. For example, the described methods may be performed in an order different from that described, and various steps may be added, omitted, or combined. In addition, features described with reference to some examples may be combined in other examples.

According to the descriptions of the foregoing implementations, a person skilled in the art may clearly understand that the foregoing method embodiments may be implemented by using software and a required universal hardware platform, or certainly may be implemented by using hardware. However, in many cases, the former is a better implementation. Based on such an understanding, the technical solutions of this application essentially or the part contributing to the prior art may be implemented in a form of a computer software product. The computer software product is stored in a storage medium (such as a ROM/RAM, a hard disk, or an optical disc), and includes several instructions for instructing a terminal (which may be mobile phone, a computer, a server, a network device, or the like) to perform the methods described in the embodiments of this application.

The embodiments of this application are described with reference to the accompanying drawings. However, this application is not limited to the foregoing specific implementations. The foregoing specific implementations are merely examples, but are not limiting. Under the enlightenment of this application, a person of ordinary skill in the art may make many forms without departing from the objective and the scope of the claims of this application, and these forms all fall within the protection scope of this application.

## Claims

1. An information transmission method, comprising:
determining, by a first communication device directly or based on first information, whether to send a first media access control control element MAC CE, wherein the first MAC CE is a discontinuous reception MAC CE in a sidelink SL, and the first information is information for determining whether to send the first media access control control element MAC CE.

2. The method according to claim 1, wherein the first information comprises at least one of following:
indication information sent by the second communication device, wherein the indication information is used to indicate to send the first MAC CE or indicate not to send the first MAC CE;
terminal assistant information sent by the second communication device; and
priority information of the first MAC CE.

3. The method according to claim 2, wherein the terminal assistant information comprises at least one of following:
Uu discontinuous reception configuration information;
quality of service QoS information; and
destination layer 2 identifier.

4. The method according to claim 2, wherein the priority information of the first MAC CE is a fixed priority value;
or the priority information of the first MAC CE is determined according to a priority value of at least one SL logical channel;
or the priority information of the first MAC CE is determined according to a multiplexing priority of SL media access control protocol data unit MAC PDU.

5. The method according to claim 4, wherein in a case that the first information is the priority information of the first MAC CE, and the priority information of the first MAC CE is determined according to the multiplexing priority of the SL MAC PDU, the method further comprises:
in a case that uplink transmission and SL transmission meet a preset condition, if the SL transmission only comprises the first MAC CE, prioritizing uplink transmission.

6. The method according to claim 1, further comprising:
determining, by the first communication device, a hybrid automatic repeat request HARQ attribute of the first MAC CE according to at least one of following:
preset fixed attribute; and
a HARQ attribute of at least one SL logical channel.

7. The method according to claim 6, after the hybrid automatic repeat request HARQ attribute of the first MAC CE is determined, further comprising:
determining, by the first communication device, a HARQ attribute of SL transmission according to a preset rule, wherein the SL transmission comprises at least the first MAC CE;
wherein the preset rule comprises at least one of following:
in a case that the HARQ attribute of the first MAC CE is a preset fixed attribute, determining the HARQ attribute of the SL transmission according to the preset fixed attribute of the first MAC CE;
in a case that the HARQ attribute of the first MAC CE is a HARQ attribute of at least one SL logical channel, if the SL transmission comprises first data, determining the HARQ attribute of the SL transmission according to a HARQ attribute of a logical channel with the highest priority among SL logical channels corresponding to the first data;
in a case that the HARQ attribute of the first MAC CE is a HARQ attribute of at least one SL logical channel, if the SL transmission comprises no first data, determining the HARQ attribute of the SL transmission according to a HARQ attribute of a logical channel with the highest priority among configured SL logical channels;
in a case that the HARQ attribute of the first MAC CE is determined according to a preset fixed attribute and a HARQ attribute of at least one SL logical channel, if the SL transmission comprises first data, determining the HARQ attribute of the SL transmission according to a HARQ attribute of a logical channel with the highest priority among SL logical channels corresponding to the first data; and
in a case that the HARQ attribute of the first MAC CE is determined according to a preset fixed attribute and a HARQ attribute of at least one SL logical channel, if the SL transmission comprises no first data, determining the HARQ attribute of the SL transmission according to the preset fixed attribute of the first MAC CE.

8. An information transmission method, comprising:
sending, by a second communication device, first information, wherein the first information is information for determining whether a first communication device sends a first media access control control element MAC CE.

9. The method according to claim 8, wherein the first information comprises at least one of following:
indication information, wherein the indication information is used to indicate to send the first MAC CE or indicate not to send the first MAC CE; and
terminal assistant information.

10. The method according to claim 9, wherein the terminal assistant information comprises at least one of following:
Uu discontinuous reception configuration information;
quality of service QoS information; and
destination layer 2 identifier.

11. An information transmission apparatus, comprising:
a first processing module, configured to determine, directly or based on first information, whether to send a first media access control control element MAC CE, wherein the first MAC CE is a discontinuous reception MAC CE in a sidelink SL, and the first information is information for determining whether to send the first media access control control element MAC CE.

12. The apparatus according to claim 11, wherein the first information comprises at least one of following:
indication information sent by the second communication device, wherein the indication information is used to indicate to send the first MAC CE or indicate not to send the first MAC CE;
terminal assistant information sent by the second communication device; and
priority information of the first MAC CE.

13. The apparatus according to claim 12, wherein the terminal assistant information comprises at least one of following:
Uu discontinuous reception configuration information;
quality of service QoS information; and
destination layer 2 identifier.

14. The apparatus according to claim 12, wherein the priority information of the first MAC CE is a fixed priority value;
or the priority information of the first MAC CE is determined according to a priority value of at least one SL logical channel;
or the priority information of the first MAC CE is determined according to a multiplexing priority of SL media access control protocol data unit MAC PDU.

15. The apparatus according to claim 14, wherein in a case that the first information is the priority information of the first MAC CE, and the priority information of the first MAC CE is determined according to the multiplexing priority of the SL MAC PDU, the apparatus further comprises:
a second processing module, configured to: in a case that uplink transmission and SL transmission meet a preset condition, if the SL transmission only comprises the first MAC CE, prioritize uplink transmission.

16. The apparatus according to claim 11, further comprising:
a first determining module, configured to determine a hybrid automatic repeat request HARQ attribute of the first MAC CE according to at least one of following:
preset fixed attribute; and
a HARQ attribute of at least one SL logical channel.

17. The apparatus according to claim 16, further comprising:
a second determination module, configured to determine a HARQ attribute of SL transmission according to a preset rule after the first determination module determines the HARQ attribute of the first MAC CE, wherein the SL transmission comprises at least the first MAC CE;
wherein the preset rule comprises at least one of following:
in a case that the HARQ attribute of the first MAC CE is a preset fixed attribute, determining the HARQ attribute of the SL transmission according to the preset fixed attribute of the first MAC CE;
in a case that the HARQ attribute of the first MAC CE is a HARQ attribute of at least one SL logical channel, if the SL transmission comprises first data, determining the HARQ attribute of the SL transmission according to a HARQ attribute of a logical channel with the highest priority among SL logical channels corresponding to the first data;
in a case that the HARQ attribute of the first MAC CE is a HARQ attribute of at least one SL logical channel, if the SL transmission comprises no first data, determining the HARQ attribute of the SL transmission according to a HARQ attribute of a logical channel with the highest priority among configured SL logical channels;
in a case that the HARQ attribute of the first MAC CE is determined according to a preset fixed attribute and a HARQ attribute of at least one SL logical channel, if the SL transmission comprises first data, determining the HARQ attribute of the SL transmission according to a HARQ attribute of a logical channel with the highest priority among SL logical channels corresponding to the first data; and
in a case that the HARQ attribute of the first MAC CE is determined according to a preset fixed attribute and a HARQ attribute of at least one SL logical channel, if the SL transmission comprises no first data, determining the HARQ attribute of the SL transmission according to the preset fixed attribute of the first MAC CE.

18. An information transmission apparatus, comprising:
a first transmission module, configured to send first information, wherein the first information is information for determining whether a first communication device sends a first MAC CE.

19. The apparatus according to claim 18, wherein the first information comprises at least one of following:
indication information, wherein the indication information is used to indicate whether to send the first MAC CE or not to send the first MAC CE; and
terminal assistant information.

20. The apparatus according to claim 19, wherein the terminal assistant information comprises at least one of following:
Uu discontinuous reception configuration information;
quality of service QoS information; and
destination layer 2 identifier.

21. A communication device, comprising a processor, a memory, and a program or an instruction stored on the memory and executable on the processor, and when the program or the instruction is executed by the processor, the steps of the information transmission method according to any one of claims 1 to 7, or the steps of the information transmission method according to any one of claims 8 to 10 are performed.

22. A readable storage medium, on which a program or an instruction is stored, wherein when the program or the instruction is executed by a processor, the steps of the information transmission method according to any one of claims 1 to 7, or the steps of the information transmission method according to any one of claims 8 to 10 are performed.

23. A chip, comprising a processor and a communication interface, wherein the communication interface is coupled to the processor, and the processor is configured to run a program or an instruction to implement steps of the information transmission method according to any one of claims 1 to 7, or steps of the information transmission method according to any one of claims 8 to 10.

24. A computer program product, wherein the program product is stored in a non-volatile storage medium, and the program product is executed by at least one processor to implement steps of the information transmission method according to any one of claims 1 to 7, or steps of the information transmission method according to any one of claims 8 to 10.
